(19) **Europäisches Patentamt**
**European Patent Office**
**Office européen des brevets**

(11) **EP 2 737 309 B1**

(12) **FASCICULE DE BREVET EUROPEEN**

(45) Date de publication et mention
de la délivrance du brevet:
**04.01.2017 Bulletin 2017/01**

(21) Numéro de dépôt: **12740948.0**

(22) Date de dépôt: **25.07.2012**

(51) Int Cl.:
*G01N 29/11* (2006.01)       *G01N 29/14* (2006.01)
*G01N 29/44* (2006.01)       *F17C 13/02* (2006.01)
*G21C 17/003* (2006.01)

(86) Numéro de dépôt international:
**PCT/EP2012/064619**

(87) Numéro de publication internationale:
**WO 2013/014200 (31.01.2013 Gazette 2013/05)**

(54) **CONTRÔLE DE RÉSERVOIR PAR ÉMISSION ACOUSTIQUE**

SCHALLEMISSIONSKONTROLLE VON BEHÄLTERN

CONTAINER CONTROL BY ACOUSTIC EMISSION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.07.2011 FR 1156774**

(43) Date de publication de la demande:
**04.06.2014 Bulletin 2014/23**

(73) Titulaire: **Institut de Soudure
93420 Villepinte (FR)**

(72) Inventeurs:
• **RAMADAN, Salah
F-69100 Villeurbanne (FR)**

• **YAACOUBI, Slah
F-57100 Thionville (FR)**
• **MANDOUZE, François
F-57000 Metz (FR)**

(74) Mandataire: **Regimbeau
20, rue de Chazelles
75847 Paris Cedex 17 (FR)**

(56) Documents cités:
**EP-A1- 0 665 432      EP-A1- 2 166 348
DE-A1-102006 033 905**

Printed by Jouve, 75001 PARIS (FR)

**Description**

La présente invention concerne le contrôle de réservoirs par la technique d'émission acoustique, notamment pour les réservoirs destinés au stockage de gaz sous haute pression.

Les réservoirs de stockage gazeux sous haute pression (HP) en matériaux composites sont utilisés dans plusieurs domaines (comme le transport et le stockage de gaz). Le contrôle de leur intégrité physique (c'est-à-dire l'intégrité de leur enveloppe) constitue un enjeu économique et sécuritaire important, notamment au vu des pressions de service utilisées (généralement à des pressions supérieures à 200 bar).

On appelle « pression de service, $P_w$ » la pression maximale appliquée aux équipements de service (il s'agit de la pression à laquelle les équipements sont prévus pour travailler en régime normal à 15°C).

Un contrôle périodique est donc nécessaire tout au long de leur cycle de vie. La fréquence du contrôle est généralement définie selon la nature du gaz stocké, les constituants des réservoirs et la politique de maintenance mise en oeuvre.

Dans ce domaine, il est connu plusieurs procédés de contrôle :

- L'épreuve hydraulique consiste à soumettre les réservoirs à une surtension en pression égale à 150% de leur pression de service. Cependant, la nature de ce procédé peut causer des dommages supplémentaires au sein des réservoirs (détérioration du raccord, déformation du liner (le liner est une enveloppe interne étanche, par exemple en matériau thermoplastique), ruptures des fibres de renfort, fissuration de la matrice ...). En outre, le procédé est coûteux et nécessite l'arrêt de l'exploitation des réservoirs.
- Le procédé de contrôle visuel consiste à inspecter visuellement par un opérateur l'enveloppe des réservoirs afin d'identifier d'éventuels détériorations existantes. Cependant ce procédé ne renseigne que sur les défauts visibles à la surface de l'enveloppe composite et du liner, et ne permet pas de statuer sur la nocivité des défauts en profondeur de l'enveloppe composite ou à l'interface liner/composite.
- Le Contrôle Non Destructif (CND) par Emission Acoustique (EA) présente une solution économique et industrielle fiable pour statuer sur la santé structurelle des réservoirs en composite tout en minimisant l'arrêt de l'exploitation des réservoirs contrôlés.

L'émission acoustique est une technique de Contrôle Non-Destructif (CND) largement utilisée d'une part, pour le suivi des structures soumises à des sollicitations d'origine mécanique (ou de toute autre type) et, d'autre part, pour l'étude de phénomènes de corrosion des matériaux métalliques.

Dans ce domaine, on connait de nombreux documents. Par exemple le document Calabro A., Esposito C., Lizza A., Giordano M., D'Amore A., Nicolais L. Analysis of the acoustic émission signals associated to failure modes in CFRP laminates. 8th European Conference on Composite Materials (ECCM-8), Naples, Italie, 1997, p.444, exploite les analyses fréquentielles pour identifier et distinguer les signaux d'émission acoustique provenant de la fissuration de la matrice, de ceux résultant de la rupture de fibres pendant les essais de traction sur des composites unidirectionnels carbone/époxy sollicités à 0° et 90° par rapport à l'axe des fibres de renfort.

Le document De Groot P.J., Wijnen P.A., Janssen R.B.F. Real time frequency détermination of acoustic for different fracture mechanisms in carbon/epoxy composites. Composites sciences and technology, 1995, vol. 55, p. 405-412, suit la même méthodologie pour discriminer les sources émissives durant les essais de traction sur des composites en carbone/époxy. L'approche proposée par De Groot et al., a permis d'identifier les domaines fréquentiels des principaux modes d'endommagement : fissuration matricielle de 90 à 180 kHz, décohésions de 240 à 310 kHz, ruptures de fibres pour des fréquences supérieures à 300 kHz.

Le document Suzuki H., Takemoto M., Ono K. A study of fracture dynamics in a model composite by acoustic signal processing. Journal of Acoustic émission, 1993, vol.11 p. 117-128, associe la décomposition en ondelette et la localisation des signaux pour classer les événements acoustiques.

Les nombreuses études examinées ont montré que l'analyse fréquentielle est une méthode potentielle de discrimination de sources émissives. Par contre, la nature du capteur (résonant ou à large bande) ainsi que les dimensions des échantillons éprouvés restent les éléments primordiaux influençant l'exactitude de l'analyse.

Depuis une trentaine d'années, de nombreuses études ont montré que l'analyse des paramètres de salves est aussi un moyen efficace pour identifier les sources émissives dans les matériaux composites. Nombreux sont aujourd'hui les documents qui différencient les sources des signaux acoustiques à partir d'un seul paramètre de salve. La plupart d'entre elles porte sur l'amplitude. Dans ce sens, le document Chen O., Karandikar P., Takeda N., Kishi T. Acoustic émission characterization of a glass-matrix composite. Nondestructive Testing and Evaluation, 1992, vol.8-9, p. 389-403, a montré l'existence de deux zones d'amplitude correspondant à des mécanismes d'endommagement différents, au cours des essais de flexion et de traction sur des éprouvettes en composite constituées de fibres de carbone courtes. Les amplitudes entre 60 et 80 dB ont été attribuées à la fissuration de la matrice, tandis que celles entre 70 et 90 dB ont été associées aux ruptures de fibres.

Le document Kim S.T., Lee Y.T. Characteristics of damage and fracture processes of carbon fiber reinforced plastic under loading-unloading test by using AE method. Materials Science and Engineering, 1997, vol. A234-236, p. 322-326, a attribué les signaux de faible amplitude, 40-70 dB, à la fissuration de la matrice et ceux de forte amplitude ,60-100 dB, aux ruptures de fibres pendant des essais de mise en charges des composites carbone/polymère à plis croisés.

L'analyse de ces études montre que les intervalles d'amplitude spécifiques aux phénomènes d'endommagement au sein d'un composite sont variables et dépendent des conditions expérimentales des essais, ainsi que de la nature du composite lui-même.

Les documents Moevus M., Godin N., R'Mili M., Rouby D., Reynaud P., Fantozzi G, Farizy G. Analysis of damage mechanisms and associated acoustic emission in two SiCf/[Si-B-C] composites exhibiting different tensile behaviours. Part II: Unsupervised acoustic emission data clustering. Composites Science and Technology, 2008, vol. 68, p. 1258-1265 et Godin N., Deschanel S., Courbon J. Emission acoustique : identification de la signature acoustique des mécanismes d'endommagement et prévision de la durée de vie. Matériaux & techniques, vol. 97, p.35-42, ont proposé, pour mieux discriminer les mécanismes d'endommagements, le recours à des méthodes complexes d'analyses statistiques multi-variables des paramètres acoustiques.

D'autres études ont montré qu'il existe pour les matériaux composites une relation directe entre une émission acoustique cumulée, correspondant au nombre d'événements par Emission Acoustique reflétant des ruptures de fibres par unité de temps, et l'état d'endommagement de la structure testée.

Par exemple, les documents Bunsell A.R., Valentin D. Towards a life prediction technique for carbon fibre filament wound structures subjected to steady pressure, Composites structures, 1983, vol. 1, n°1, p. 67-81 et Valentin D., Bunsell A.R. Suivi de l'endommagement des composites à fibres de carbones par émission acoustique. 3èmes journées Nationales sur les Composites, 21-23 septembre 1982, Paris, p. 131-140, concernent le suivi d'endommagement et la prédiction de la durée de vie des composites par émission acoustique.

Le document EP 2 199 787 a montré que l'émission acoustique est une méthode fiable du contrôle des équipements sous pression. Les critères d'évaluation de l'état de ces équipements sont basés sur trois classes d'évènements : non critique, intermédiaire et critique. Les principaux paramètres acoustiques utilisés pour définir ces classes sont : le nombre total de signaux, le nombre de coups et le nombre de signaux dépassant une amplitude de 75 dB$_{ea}$.

Le potentiel reconnu du contrôle par émission acoustique a suscité de nombreuses études spécifiques dédiées à l'étude de l'évaluation des structures complexes en composite, en particulier le contrôle des réservoirs de stockage de gaz sous haute pression.

Les documents Blassiau S. Modélisation des phénomènes microstructuraux au sein d'un composite unidirectionnel carbone/époxy et prédiction de durée de vie : contrôle et qualification de réservoirs bobinés, Thèse de doctorat, Ecole Nationale Supérieure des Mines de Paris, 2005, Bunsell A.R., Valentin D (évoqué précédemment) et FR 2 838 519 (dont les inventeurs cités sont T. Muller, L. Valin Anthony Bunsell) ont montré que l'émission acoustique peut être utilisée pour le contrôle périodique des réservoirs de stockage de gaz sous haute pression. Plus précisément, le document FR 2 838 519 concerne un procédé de contrôle et de qualification d'un réservoir en matériau composite comprenant les étapes suivantes:

- disposer deux capteurs acoustiques sur le réservoir,
- soumettre le réservoir à un essai de fluage par une mise en pression interne de celui-ci à une pression d'essai égale à la pression maximale de fonctionnement,
- maintenir le réservoir à ladite pression d'essai pendant une durée prédéterminée comprise entre environ 4 et 24 heures,
- acquérir à l'aide des capteurs acoustiques pendant ladite durée prédéterminée les émissions acoustiques correspondant au phénomène de libération d'énergie sous forme d'ondes élastiques transitoires au sein du matériau composite soumis à sollicitation, en éliminant par filtrage le bruit de fond inférieur à un niveau sonore prédéterminé,
- enregistrer l'ensemble des émissions acoustiques acquises à l'aide des capteurs acoustiques,
- soumettre les émissions acoustiques enregistrées à un filtrage passe-haut avec une valeur limite de filtrage supérieure audit niveau sonore prédéterminé de manière à conserver essentiellement les émissions acoustiques liées à la rupture des fibres au sein du matériau composite,
- comparer le nombre d'émissions acoustiques enregistrées et filtrées acquises pendant ladite durée déterminée avec un nombre limite d'émissions acoustiques déduit d'une courbe limite préétablie pour un réservoir virtuel critique du même type et ayant la même durée d'exploitation passée mais révélant un endommagement excessif affectant le bon fonctionnement à la fin d'une durée résiduelle prédéterminée, et
- qualifier ou non comme apte à un usage pour ladite période résiduelle prédéterminée le réservoir testé selon que le nombre d'émissions acoustiques enregistrées et filtrées acquises pendant ladite durée déterminée est inférieur ou non au nombre limite d'émissions acoustiques déduit de la courbe limite préétablie.

Pour ce faire, il a par exemple été proposé de comparer l'activité acoustique, en termes de nombre de salves cumulées, à des courbes maîtresses de référence préétablies et de valider le maintien en service d'un réservoir si le nombre d'évènements détectés est inférieur à ces courbes de référence.

Les documents Bohse J., Mair G.M., Anders S. Manufacturing quality control of high pressure composite cylinders by acoustic emission ENCDT, 25-29 september, Berlin 2006, et US 2008/0302186 ont montré que la technique d'émission acoustique peut être utilisée pour contrôler les réservoirs haute pression durant la phase d'autofrettage.

Dans ce domaine, on connait également le document US 5522428.

Le document EP 0665432 a trait à l'application de la technique d'émission acoustique pour prédire la charge à rupture d'une structure, notamment les réservoirs composites de stockage de gaz sous haute pression. La charge à rupture du réservoir est déterminée à partir d'une loi prédéfinie établie à partir de l'activité acoustique, plus précisément de la variation de l'énergie d'émissions acoustiques, engendrée par l'évolution des endommagements. Cependant, il s'avère que la seule prédiction de la charge à rupture d'un réservoir n'est pas une méthode suffisante de qualification ou requalification d'un équipement sous pression.

Le document EP 2166348 propose de détecter des dommages dans les réservoirs haute pression par la technique d'émission acoustique. L'approche utilisée dans ce document repose sur l'identification de l'intensification du taux de salves et de nombre de coups pour statuer sur la santé du réservoir durant un essai de pressurisation.

En résumé, la technique d'analyse d'émission acoustique s'est avérée être un procédé adapté à l'analyse des phénomènes d'endommagement au sein des matériaux composites quelle que soit l'analyse réalisée (fréquentielle, amplitude, multivariable...).

Cependant, la mise en pression des réservoirs, par exemple des réservoirs de stockage de gaz sous haute pression, engendre une activité acoustique complexe résultant notamment de leur géométrie et de leur composition complexe. Celle-ci n'est pas toujours aisée à discriminer de celle provenant de l'évolution des défauts au sein de la structure éprouvée, plus précisément les mécanismes élémentaires d'endommagement qui mènent à la rupture de clusters de fibres de renfort, et en conséquence à la ruine du réservoir. Compte tenu de l'enjeu sécuritaire, il est nécessaire de proposer une solution technique permettant le contrôle de la combinaison des mécanismes élémentaires d'endommagement (exempli grati., fissuration de la matrice, décohésion fibre-matrice, ruptures de fibres de renfort...) qui sont à l'origine de la ruine des structures en composite, notamment les réservoirs de stockage de gaz sous haute pression, ainsi que de mettre en oeuvre une méthodologie pour s'affranchir de la complexité de la signature acoustique durant le contrôle.

Ainsi l'objet de la présente invention est d'offrir un procédé de contrôle amélioré par rapport à l'état de la technique.

Plus précisément, l'objet de la présente invention est d'offrir un procédé ne provoquant pas de dommage supplémentaire à l'enveloppe du réservoir tout en permettant d'identifier les dommages existants et permettant en particulier d'évaluer la nocivité des défauts en profondeur de l'enveloppe.

Plus précisément, l'objet de la présente invention est d'offrir un procédé de discrimination simple à mettre en oeuvre tout en garantissant une bonne qualité de discrimination.

L'approche proposée dans le cadre de cette invention se focalise sur la problématique essentielle des matériaux composites: le contrôle de la combinaison de leurs mécanismes élémentaires d'endommagement, qui est le facteur déterminant de leur intégrité en condition de service. Cette approche est basée sur la définition d'une combinaison, appelée dans le cadre de cette invention seuil critique $S_c$, de paramètres acoustiques normalisés. Cette combinaison permet de définir la nocivité et la criticité de la combinaison des mécanismes d'endommagement qui conduisent à la rupture du ou des réservoir(s). Celle-ci permet de statuer sur leur santé et leur intégrité durant leur qualification ou leur requalification périodique, selon un cycle de montée en pression bien défini. Pour définir convenablement le seuil, il est judicieux de définir une méthodologie d'interprétation des données EA durant le contrôle du réservoir, étant donnée la nature complexe de sa signature acoustique pendant l'épreuve. La complexité de cette signature est inhérente au composite étudié, compte tenu de son architecture, de son hétérogénéité, de l'anisotropie de ses propriétés mécaniques...

Plus précisément encore, l'invention concerne un procédé de contrôle d'un réservoir, notamment d'un réservoir en matériau composite, préférentiellement destiné au stockage de gaz sous haute pression, le réservoir étant pourvu d'au moins un capteur acoustique, le procédé étant caractérisé en ce qu'il comprend les étapes suivantes :

■ remplir le réservoir d'un fluide,
■ acquérir des données relatives à l'amplitude (amplitude maximale du signal) et l'énergie (énergie contenue dans un signal entre les instants t-T et T, elle est calculée à partir de l'équation : $E = \int_{t-T}^{t} V^2(t)dt$, où V(t) désigne l'amplitude à l'instante t )d'émissions acoustiques résultant du remplissage, à l'aide du ou des capteur(s),
■ déterminer au moins une valeur seuil critique ($S_c$) à partir d'une combinaison linéaire entre des données relatives à l'amplitude et l'énergie, obtenues pour un cluster de signaux localisé zonalement dans le rayon d'écoute du ou des capteurs, déterminée à partir de la formule suivante :

$$\sum_{i=1}^{N}\left(\frac{A_i}{A_i\,\max}+\frac{E_i}{E_i\,\max}\right)$$

avec

N : nombre d'émissions acoustiques, plus précisément le nombre de salves dans le cluster localisé ;
$A_i$ : amplitude cumulée sur au moins un capteur placé sur l'enveloppe du réservoir lors de l'émission acoustique i,
$A_{i\,max}$ : amplitude maximale sur au moins un capteur placé sur l'enveloppe du réservoir lors de l'émission acoustique i,
E : énergie cumulée sur au moins un capteur placé sur l'enveloppe du réservoir lors de l'émission acoustique i,
$E_{i\,max}$ : énergie maximale sur au moins un capteur placé sur l'enveloppe du réservoir lors de l'émission acoustique i,

■ en fonction de cette valeur seuil critique ($S_c$), en déduire un état du réservoir.

L'état du réservoir peut également être déterminé en prenant en compte la valeur du nombre de salves ayant une amplitude supérieure à 75 dB en plus de l'énergie.

L'invention concerne également une installation de contrôle d'un réservoir préférentiellement destiné au stockage de gaz sous haute pression, comprenant des moyens de mise en oeuvre du procédé selon l'une des revendications précédentes et notamment :

• au moins deux capteurs acoustiques (CA),
• un moyen de contrôle de la pressurisation du réservoir lors d'un remplissage du réservoir,
• un moyen d'acquisition des données relatives à l'amplitude et l'énergie d'émissions acoustiques intervenant lors du remplissage,
• un moyen de détermination d'au moins une valeur seuil critique ($S_c$) à partir d'une combinaison linéaire entre des données relatives à l'amplitude et l'énergie, obtenues pour un cluster de signaux localisé zonalement dans le rayon d'écoute du ou des capteurs, déterminée à partir de la formule suivante :

$$\sum_{i=1}^{N}\left(\frac{A_i}{A_i\,\max}+\frac{E_i}{E_i\,\max}\right)$$

avec

N : nombre d'émissions acoustiques, plus précisément le nombre de salves dans le cluster localisé ;
$A_i$ : amplitude cumulée sur au moins un capteur placé sur l'enveloppe du réservoir lors de l'émission acoustique i,
$A_{i\,max}$ : amplitude maximale sur au moins un capteur placé sur l'enveloppe du réservoir lors de l'émission acoustique i,
E : énergie cumulée sur au moins un capteur placé sur l'enveloppe du réservoir lors de l'émission acoustique i,
$E_{i\,max}$ : énergie maximale sur au moins un capteur placé sur l'enveloppe du réservoir lors de l'émission acoustique i,

• un moyen de déduction d'un état du réservoir en fonction de ces valeurs seuil critique ($S_c$).

D'autres caractéristiques, buts et avantages de la présente invention apparaitront à la lecture de la description détaillée qui va suivre, au regard des figures annexées, données à titre d'exemples non limitatifs et sur lesquelles :

• la figure 1 est un graphe représentant un exemple d'émission acoustique dans un réservoir mis sous pression en indiquant l'amplitude par rapport au temps,
• la figure 2 est un système de contrôle d'un réservoir selon un mode de réalisation particulier de la présente invention, montrant un exemple d'agencement de capteurs acoustiques sur un réservoir selon un mode de réalisation particulier de la présente invention,
• la figure 3 est un graphe représentant un exemple de pression à laquelle est soumis un réservoir selon un mode de réalisation de la présente invention en indiquant la pression par rapport au temps,

- la figure 4 est un organigramme schématique du procédé de contrôle conforme à la présente invention.

Dans la suite de la description, on entendra par « réservoir(s) » tout type d'équipement sous pression, tel qu'un tube, une bouteille ou un réservoir, comprenant au moins un orifice d'entrée pour le fluide à stocker (orifice ci-après appelé « robinet »).

La présente invention propose un procédé automatisé d'aide à la qualification périodique des réservoirs en composites par analyse des émissions acoustiques. Les inventeurs ont découvert que la détermination d'une valeur seuil critique $S_c$ à partir d'une combinaison linéaire entre des données relatives à l'amplitude et l'énergie d'émissions acoustiques permettait d'offrir une discrimination précise de l'état du réservoir, améliorée par rapport à l'état de la technique.

Cette invention s'applique particulièrement au contrôle (pour la qualification ou requalification) périodique des réservoirs en matériaux composites destinés au stockage de gaz sous haute pression entièrement bobinés et dotés d'un liner métallique ou non.

La norme EN 1330-9: 2002 (EN 1330-9:2000, Non-destructive testing. Terminology. Terms used in acoustic emission testing) définit l'émission acoustique (EA) comme étant « un phénomène de libération d'énergie sous forme d'ondes élastiques transitoires résultant des micro-déplacements locaux internes au sein d'un matériau soumis à des sollicitations mécaniques ou d'un autre type ». Dans un matériau composite, la libération d'énergie est due notamment à des modifications structurelles internes telles les ruptures des fibres de renfort, les décohésions fibre/matrice, les fissures inter ou intra-laminaires, etc. Les mouvements de particules à la surface du matériau résultant de ces modifications sont détectés au moyen de capteurs, qui les convertissent en signaux électriques, tels que des capteurs acoustiques (piézoélectriques par exemple).

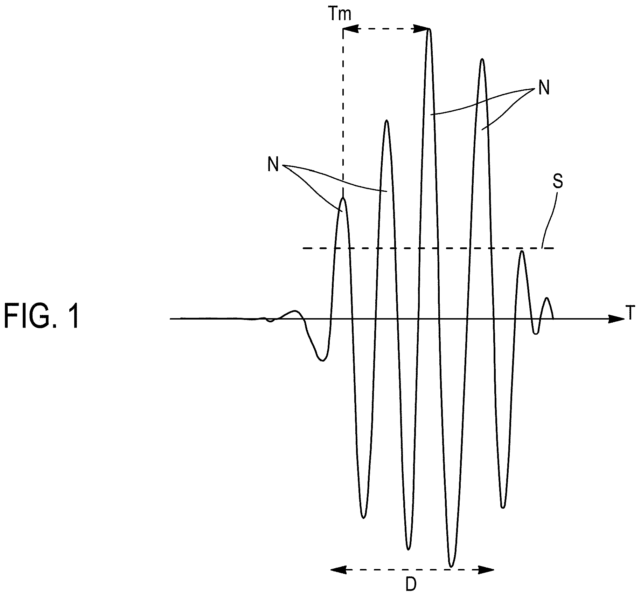

En référence à la figure 1, une émission acoustique est caractérisée essentiellement par :

- une amplitude crête qui corresponde à l'amplitude maximale atteinte par le signal. Elle est exprimée en volt ou bien en dB,
- une énergie (intégrale de l'amplitude au carré),
- une durée D correspondant au temps qui s'écoule entre le premier et le dernier dépassement du seuil de référence S par un des maxima de l'émission acoustique,
- un nombre de coups N qui est déterminé à partir du nombre de fois où l'amplitude des impulsions de l'émission acoustique dépasse le seuil S donné,
- un temps de montée Tm qui est déterminé à partir du temps durant lequel l'émission acoustique atteint son amplitude maximale.

L'invention met en oeuvre la technique d'émission acoustique dans une nouvelle application de contrôle automatisé exploitant de préférence une surpression de pression interne au réservoir, due notamment à une variation de température qui engendre la surpression permettant de stimuler la structure pendant le remplissage du réservoir ou d'un lot de réservoirs (par exemple dans un cadre porteur). Cette variation de température peut être obtenue par exemple en effectuant un remplissage rapide du réservoir. Le remplissage rapide engendrant une augmentation de la température par frottement entre les molécules de fluide, et la température engendrant une surpression. Dans ce cas, le contrôle est réalisé lors du remplissage à la pression maximale atteinte Pmax. Cependant le contrôle est réalisé, par exemple, à 110% de la pression de service $P_w$ si le remplissage n'engendre pas une surpression. La pression de service a été définie précédemment comme étant égale à la pression maximale appliquée aux équipements de service en régime normal. Cette pression de service, ou pression de travail, correspond à la pression maximale que la charge gazeuse peut atteindre à une température uniforme de 288 K (15°C), lorsque le réservoir est plein.

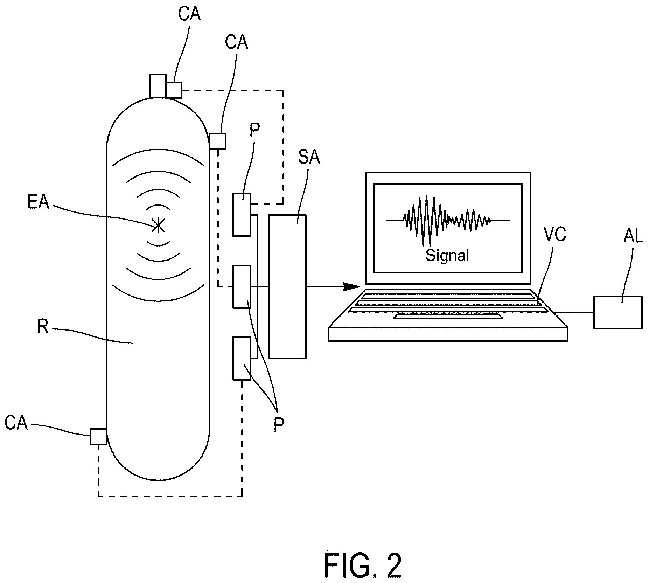

En référence à la figure 2, une installation de contrôle automatisé selon un mode de réalisation de la présente invention est composée préférentiellement :

- de plusieurs capteur(s) acoustique(s) CA (le cas échéant d'un capteur unique CA, mais une pluralité de capteurs est préférentielle. Comme cela sera précisé par la suite on utilise de préférence 3 capteurs CA),
- d'un moyen d'injection (non représenté) de couplant visqueux pour la bonne adhésion des capteurs (il peut s'agir par exemple d'une graisse silicone par exemple) ;
- d'un moyen d'acquisition SA de données provenant du ou des capteur(s) acoustique(s) CA lors d'une émission acoustique EA,
- d'un moyen de traitement UC des données acoustiques, tel qu'un ordinateur par exemple ou toute autre unité de traitement permettant de déterminer un état du réservoir à partir des données acquises,

d'un système d'alarme de sécurité AL déclenché automatiquement lorsque l'état déterminé nécessite le rejet du réservoir (s'il est par exemple déterminé que l'enveloppe du réservoir est trop abîmée). Les alarmes sont déclenchées localement et/ou à distance par exemple via un système de communication sans fil (par exemple par wifi).

Les capteurs acoustiques CA peuvent être par exemple des capteurs piézoélectriques. Facultativement, les capteurs acoustiques CA sont munis de préamplificateurs P, intégrés ou pas aux capteurs CA.

Le contrôle du réservoir est effectué à l'aide d'au moins deux capteurs dont l'un est agencé au niveau du robinet et l'autre, au niveau de la partie cylindrique.

En référence à la figure 2, le contrôle du réservoir est effectué préférentiellement à l'aide de trois capteurs CA, respectivement agencés au niveau du robinet servant au remplissage et à l'exploitation du gaz et aux niveaux des fonds supérieur et inférieur du réservoir (typiquement par exemple entre le corps central cylindrique et des calottes sphériques d'extrémité du réservoir). Le nombre de capteurs CA varie selon les dimensions du réservoir et la mesure de l'atténuation des ondes ultrasonores. Leur disposition, qui peut par exemple s'étendre selon une hélice sur le réservoir, et leur écartement, par exemple au maximum de l'ordre de 60cm pour des capteurs piézoélectriques, sont adaptés de sorte que l'ensemble des capteurs couvrent par leurs zones de sensibilité cumulées la totalité de la surface du réservoir.

D'une manière générale, on veillera à placer au moins un capteur sur les zones les plus sensibles du réservoir, c'est-à-dire les zones les plus susceptibles de subir des endommagements, tels que par exemple les extrémités du réservoir, notamment le fond inférieur et la partie supérieure opposée, ainsi que la partie médiane du réservoir.

Avantageusement, il est prévu d'utiliser un capteur passe haut (supérieur à 550kHz) pour le capteur agencé au niveau du robinet et un capteur à large bande (entre 50 et 400 kHz) de fréquence de résonance de 150 kHz, pour le ou les capteurs agencés au niveau de l'enveloppe composite.

Le procédé de contrôle selon l'invention est économique et permet de statuer sur la santé structurelle de réservoirs en temps réel. Les réservoirs ne sont pas immobilisés durant le contrôle. En effet, l'invention est préférentiellement mise en oeuvre durant le remplissage en opération du réservoir et ne nécessite donc pas de phase de test spécifique nécessitant l'immobilisation du réservoir. Ainsi, le contrôle est effectué de préférence en exploitant une surpression due à une augmentation de température (par exemple 2 fois la température ambiante de l'essai, au maximum 85°C) qui intervient à chaque remplissage d'un réservoir et qui engendre une surpression suffisante pour stimuler la structure. En effet, selon le débit de gaz, une surtension en température cause une surpression qui atteint une valeur maximale $P_{max}$ supérieure à la pression de service $P_s$ lors d'un remplissage du réservoir.

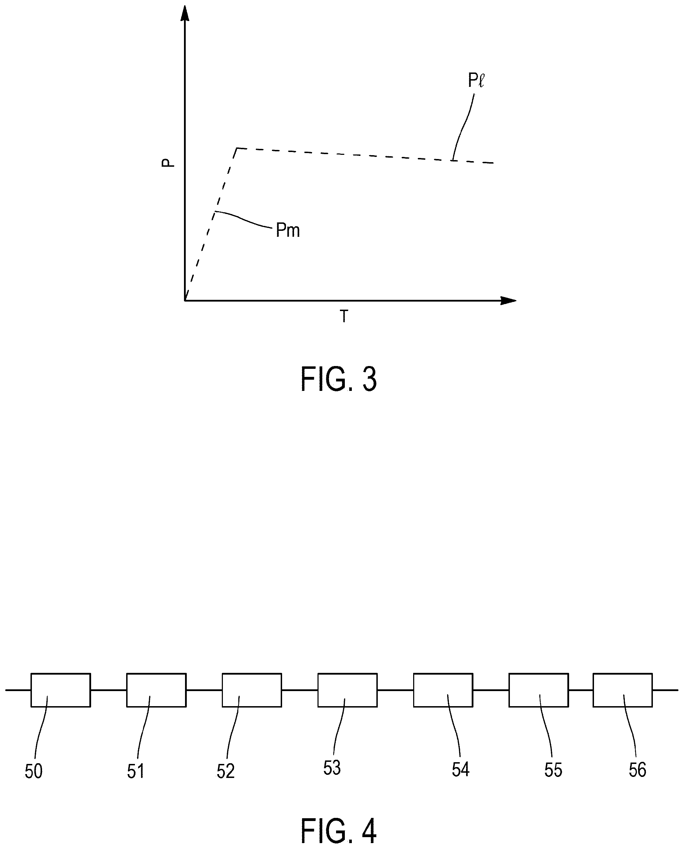

En référence à la figure 3, le procédé de contrôle est effectué pendant une phase de remplissage suivi d'un palier P1 de maintien à $P_{max}$. Préférentiellement, ce palier est en réalité un pseudo-palier P1 (c'est-à-dire que la pression subit une diminution faible, à cause de la baisse de la température, généralement avec une pente d'environ 1 %). L'augmentation de la température de l'enveloppe en cours de remplissage, ne perturbe pas les émissions acoustiques ni la sensibilité des capteurs (la sensibilité de ceux-ci couvrant la gamme de température atteint lors du remplissage).

Alternativement, l'étape de remplissage est effectuée de sorte à générer une surpression comprise entre 100 et 120% d'une pression de service du réservoir, et préférentiellement 110% de la pression de service, par exemple correspond à la dernière pression maximale à laquelle le réservoir a été soumis durant une période donnée (c'est-à-dire que pour une pression de service de Xbars la surpression de remplissage sera de Xbars à 1,2Xbars, préférentiellement 1,1Xbars). Préférentiellement, la période donnée est d'environ un an.

Ainsi, l'acquisition des données relatives à l'amplitude et l'énergie d'émissions acoustiques résultant du remplissage, à l'aide du ou des capteur(s) est effectuée lors de la phase de remplissage du réservoir et lors du palier (ou pseudo-palier) de pression.

Selon un mode de réalisation possible de la présente invention, le remplissage est effectué par palier. Mais selon un mode de réalisation préférée de la présente invention, et comme représenté à la figure 3, la phase de remplissage Pm du réservoir (durant laquelle est effectuée au moins une partie de l'acquisition des données) est effectuée sans palier de pression.

Le procédé de contrôle proprement dit est basé, d'une part, sur un traitement du signal et, d'autre part, sur un seuil de référence permettant de rejeter ou d'accepter qu'un réservoir reste en service jusqu'au prochain contrôle. Plus précisément, ce seuil est obtenu à partir de combinaisons linéaires entre des paramètres acoustiques comme expliqué ci-après. Plus précisément encore, de préférence la présente invention exploite deux seuils différents : un premier seuil S dans une phase d'acquisition et un deuxième seuil Se (supérieur au seuil S) dans une phase d'évaluation ultérieure.

En référence à la figure 4, un procédé de contrôle selon un mode de réalisation de la présente invention comprend les étapes suivantes :

- Etape 50 : remplir le réservoir d'un fluide et ainsi le mettre en pression.

  1. Etape 51 : filtrer et enregistrer les données issues des capteurs acoustiques CA. A cet égard et afin de prendre en compte le bruit ambiant et les contraintes de mesure, un seuil flottant d'acquisition S est préférentiellement fixé à 40 dB avec un ratio seuil/bruit de fond égal à 6. Préférentiellement on ne tient compte que des signaux dont le nombre N de coups dépassant le seuil d'acquisition S est supérieur à 2 et la durée individuelle

supérieure à 5 $\mu$s. Préférentiellement encore, un filtre passe bande 50-850 kHz est appliqué sur les émissions acoustiques. Ainsi de préférence, l'acquisition des données est effectuée à chaque émission acoustique dont le ratio seuil/bruit est compris en 2 et 6.

- Etape 52 : acquérir par le moyen d'acquisition SA des données relatives à l'amplitude et l'énergie d'émissions acoustiques intervenant lors du remplissage. La mise sous pression engendre une activité intrinsèque liée aux multiples phénomènes de déformations, de fissuration ou équivalent du réservoir. Pour s'en affranchir, il est prévu, encore plus préférentiellement que seule l'activité acoustique dépassant un seuil d'évaluation Se de 55 dB soit analysée. Le comportement acoustique du réservoir est préférentiellement suivi pendant une durée $T_0$ égale à la durée de remplissage ainsi que pendant un pseudo palier de maintien à la pression maximale atteinte $P_{max}$ ou à la pression de service $P_s$ pendant une durée égale à T0+t (10 à 20 minutes, par exemple). La pressurisation des réservoirs engendre une activité acoustique intense dépassant le seuil d'acquisition. Pour éviter la saturation du système de contrôle et la détection des activités acoustiques redondantes liées aux multiples phénomènes de réflexions à la surface du réservoir, la taille de la fenêtre d'enregistrement des signaux acoustiques ne doit pas dépasser un temps donné, par exemple de 600 $\mu$s. De préférence un temps mort, par exemple de l'ordre de 1000 $\mu$s, est observé entre deux fenêtres d'enregistrement consécutives de 600 $\mu$s.
- Etape 53 : déterminer par le moyen de traitement UC une valeur seuil critique $S_c$ à partir d'une combinaison linéaire entre des données relatives à l'amplitude et l'énergie. Le seuil $S_c$ est donné par la formule suivante :

$$= \sum_{i=1}^{N} \left( \frac{Ai}{Ai\max} + \frac{Ei}{Ei\max} \right)$$

avec

N : nombre d'émissions acoustiques dépassant le seuil d'acquisition S ou d'évaluation Se,
$A_i$ : amplitude cumulée sur au moins un capteur placé sur l'enveloppe du réservoir, lors de l'émission acoustique i dépassant les seuils,
$A_{i\,max}$: amplitude maximale sur au moins un capteur placé sur l'enveloppe du réservoir, lors de l'émission acoustique i,
E : énergie cumulée sur au moins un capteur placé sur l'enveloppe du réservoir, lors de l'émission acoustiques i dépassant les seuils,
$E_{i\,max}$ : énergie maximale au moins un capteur placé sur l'enveloppe du réservoir, lors de l'émission acoustique i. L'énergie est obtenue par l'intégral des impulsions mesurées des émissions acoustiques.

- Etape 54 : en fonction de cette valeur seuil critique ($S_c$), en déduire un état du réservoir. L'état du réservoir est déterminé en comparant la valeur seuil critique $S_c$ de chaque capteur acoustique placé sur le corps du réservoir, obtenue à partir des mesures opérées sur un réservoir analysé à une valeur seuil critique de référence $S_{cref}$ établie à partir de l'analyse de l'activité acoustique obtenue lors du contrôle d'un réservoir ou lot de réservoirs de même nature que le réservoir contrôlé ayant subi des dommages artificiels représentatifs de ceux observés généralement en service et ce, pendant un cycle de pressurisation similaire à celui du remplissage. On qualifie (ou requalifie) ainsi le réservoir apte à rester en service préférentiellement pour une durée résiduelle de 3 à 10 ans et ce, selon la nature du gaz stocké, si le seuil critique de référence $S_{cref}$ défini n'est pas dépassé lors du contrôle par au moins une valeur seuil critique $S_c$ de l'ensemble des capteurs.(le capteur placé sur le raccord est utilisé pour renseigner sur le bruit de fond, l'état du raccord et l'état de la liaison entre le raccord et le réservoir)
- Etape 55 : Le tableau ci-dessous donne un exemple de critères de rejet basés sur le seuil critique, l'amplitude et l'énergie de n signaux :

| Critère | Valeur | Valeur haute | Valeur basse |
|---|---|---|---|
| $S_c$ | 180 | 185 | 175 |
| Energie cumulée/min | $7 \times 10^8$ V².S | $7,2 \times 10^8$ V².S | $6,7 \times 10^8$ V².S |
| Nbre de signaux cumulés d'amplitude $\geq 75$ dB | 30 | 33 | 27 |

Etape 56 : Envoyer un signal vers un système d'alarme AL de sécurité pour retirer le réservoir si le seuil de référence $S_{cref}$ est dépassé.

De plus, une valeur du bruit de fond est surveillée tout en long du contrôle. Elle ne doit pas dépasser la valeur du seuil d'acquisition et permet d'alerter sur la présence de fuite et sur la sensibilité du contrôle.

Les défauts critiques au sein du liner conduisent à la dépressurisation du réservoir et à des fuites de gaz. Celles-ci conduisent à un bruit de fond élevé. Typiquement le réservoir testé est considéré défectueux si la valeur du bruit de fond est supérieure à 50 dB.

Les inventeurs ont également déterminé que de préférence pour valider le processus de contrôle, il est vérifié que la sensibilité des capteurs avant et après le contrôle, ne diffère pas de plus de 3 dB.

L'invention s'applique en particulier aux réservoirs réalisés par enroulement filamentaire, entièrement bobinés avec un liner métallique ou non métallique.

**Revendications**

1. Procédé de contrôle d'un réservoir, notamment d'un réservoir en matériau composite, préférentiellement destiné au stockage de gaz sous haute pression, le réservoir étant pourvu d'au moins un capteur acoustique pendant le contrôle, le procédé étant **caractérisé en ce qu'**il comprend les étapes suivantes :

■ remplir le réservoir d'un fluide (50),
■ acquérir des données relatives à l'amplitude et l'énergie d'émissions acoustiques résultant du remplissage, à l'aide du ou des capteur(s) (51, 52),
■ déterminer au moins une valeur seuil critique ($S_c$) à partir d'une combinaison linéaire entre des données relatives à l'amplitude et l'énergie, obtenues pour un cluster de signaux localisé zonalement dans le rayon d'écoute du ou des capteurs, déterminée à partir de la formule suivante (53):

$$\sum_{i=1}^{N}\left(\frac{A_i}{A_i \max} + \frac{E_i}{E_i \max}\right)$$

avec

N : nombre d'émissions acoustiques, plus précisément le nombre de salves dans le cluster localisé ;
$A_i$ : amplitude cumulée sur au moins un capteur placé sur l'enveloppe du réservoir lors de l'émission acoustique i,
$A_{i \max}$ : amplitude maximale sur au moins un capteur placé sur l'enveloppe du réservoir lors de l'émission acoustique i,
E : énergie cumulée sur au moins un capteur placé sur l'enveloppe du réservoir lors de l'émission acoustique i, l'énergie étant l'intégrale de l'amplitude au carré,
$E_{i \max}$ : énergie maximale sur au moins un capteur placé sur l'enveloppe du réservoir lors de l'émission acoustique i,

■ en fonction de cette valeur seuil critique ($S_c$), en déduire un état du réservoir.

**2.** Procédé selon la revendication précédente, **caractérisé en ce que** l'étape de remplissage (50) est effectuée de sorte à générer une surpression comprise entre 100% et 120% d'une pression de service du réservoir, et préférentiellement 110% de la pression de service, la pression de service correspondant à la pression à laquelle le réservoir est prévu pour travailler en régime normal à 15°C.

**3.** Procédé selon la revendication précédente, **caractérisé en ce que** la pression de service correspond à la dernière pression maximale à laquelle le réservoir a été soumis.

**4.** Procédé selon l'une des revendications précédentes, **caractérisé en ce que** l'acquisition des données relatives à l'amplitude et l'énergie d'émissions acoustiques résultant du remplissage, à l'aide du ou des capteur(s) est effectuée lors de la phase de remplissage du réservoir et lors d'un palier de pression ultérieur.

**5.** Procédé selon la revendication précédente, **caractérisé en ce que** l'acquisition des données est effectuée à chaque émission acoustique dépassant un seuil d'acquisition de 40 dB.

**6.** Procédé selon l'une des revendications précédentes, **caractérisé en ce que** l'analyse des données est effectuée à chaque émission acoustique dépassant un seuil d'évaluation de 55 dB.

**7.** Procédé selon l'une des revendications précédentes, **caractérisé en ce que** la valeur seuil critique ($S_c$) est déterminée à partir d'une addition des données relatives à l'amplitude et l'énergie aux émissions acoustiques acquises à chaque intervention d'un phénomène physique.

**8.** Procédé selon l'une des revendications précédentes, **caractérisé en ce que** l'acquisition des signaux n'est effectuée que pour les émissions acoustiques ayant un nombre de coups supérieur à 2 et une durée supérieure à 5 $\mu$s.

**9.** Procédé selon l'une des revendications précédentes, **caractérisé en ce que** préalablement à l'acquisition des signaux, un filtre passe bande 50-850 kHz est appliqué sur les signaux détectés.

**10.** Procédé selon l'une des revendications précédentes, **caractérisé en ce que** la détermination de l'état du réservoir est effectuée en comparant la valeur seuil critique ($S_c$) de chaque capteur et une valeur de référence (Scref) établie à partir de l'activité acoustique d'au moins un réservoir comprenant des dommages prédéterminés lors d'un remplissage de ce réservoir.

**11.** Procédé selon l'une des revendications précédentes, **caractérisé en ce que** le réservoir est réalisé par enroulement filamentaire, entièrement bobiné avec un liner métallique ou non métallique.

**12.** Procédé selon l'une des revendications précédentes, **caractérisé en ce qu'**il comprend une étape de surveillance de l'évolution (54) du bruit de fond afin de déclencher une alarme lorsque le bruit de fond atteint un niveau élevé représentatif d'une fuite.

**13.** Procédé selon la revendication précédente, **caractérisé en ce qu'**un des capteurs est agencé au niveau du robinet du réservoir et que ce capteur est un capteur passe-haut, préférentiellement supérieur à 550kHz.

**14.** Procédé selon l'une des revendications précédentes, **caractérisé en ce qu'**il comprend préalablement l'étape suivante :

• instrumenter le réservoir avec au moins deux capteurs piézoélectriques repartis régulièrement autour du réservoir.

**15.** Procédé selon l'une des revendications précédentes, **caractérisé en ce qu'**il comprend une étape consistant à vérifier que la sensibilité des capteurs avant et après le contrôle ne diffère pas de plus de 3 dB.

**16.** Installation de contrôle d'un réservoir préférentiellement destiné au stockage de gaz sous haute pression, comprenant des moyens de mise en oeuvre du procédé selon l'une des revendications précédentes et notamment :

• au moins deux capteurs acoustiques (CA),

• un moyen de contrôle de la pressurisation du réservoir lors d'un remplissage du réservoir,

• un moyen d'acquisition des données relatives à l'amplitude et l'énergie d'émissions acoustiques intervenant lors du remplissage,

• un moyen de détermination d'au moins une valeur seuil critique (S$_c$) à partir d'une combinaison linéaire entre des données relatives à l'amplitude et l'énergie, obtenues pour un cluster de signaux localisé zonalement dans le rayon d'écoute du ou des capteurs, déterminée à partir de la formule suivante :

$$\sum_{i=1}^{N}\left(\frac{A_i}{A_i\,\max}+\frac{E_i}{E_i\,\max}\right)$$

avec

N : nombre d'émissions acoustiques, plus précisément le nombre de salves dans le cluster localisé

A$_i$ : amplitude cumulée sur au moins un capteur placé sur l'enveloppe du réservoir lors de l'émission acoustique i,

A$_{i\,max}$ : amplitude maximale sur au moins un capteur placé sur l'enveloppe du réservoir lors de l'émission acoustique i,

E : énergie cumulée sur au moins un capteur placé sur l'enveloppe du réservoir lors de l'émission acoustique i, l'énergie étant l'intégrale de l'amplitude au carré,

E$_{i\,max}$ : énergie maximale sur au moins un capteur placé sur l'enveloppe du réservoir lors de l'émission acoustique i,

• un moyen de déduction d'un état du réservoir en fonction de ces valeurs seuil critique (S$_c$).

**Patentansprüche**

1. Verfahren zum Kontrollieren eines Behälters, insbesondere eines Behälters aus Verbundwerkstoff, der bevorzugt zum Lagern von Gas unter hohem Druck bestimmt ist, wobei der Behälter während der Kontrolle mit mindestens einem akustischen Sensor versehen ist, Verfahren **dadurch gekennzeichnet, dass** es die folgenden Schritte umfasst:

- Füllen des Behälters mit einem Fluid (50),

- Erfassen der Daten in Zusammenhang mit der Amplitude und der Energie akustischer Sendungen, die aus dem Füllen resultieren, mit Hilfe des oder der Sensoren (51, 52),

- Bestimmen mindestens eines kritischen Schwellenwerts ausgehend von einer linearen Kombination zwischen den Daten in Zusammenhang mit der Amplitude und der Energie, die für ein Cluster von Signalen erhalten werden, das zonal in dem Hörumfeld des Sensors oder der Sensoren liegt, der ausgehend von der folgenden Formel (53) bestimmt wird:

$$\sum_{i=1}^{N}\left(\frac{A_i}{A_i\,\max}+\frac{E_i}{E_i\,\max}\right)$$

wobei

N: die Anzahl akustischer Sendungen ist, genauer genommen die Anzahl von Bursts in dem lokalisierten Cluster,

A$_i$: die summierte Amplitude auf mindestens einem Sensor ist, der auf dem Mantel des Behälters bei der akustischen Sendung i platziert ist,

Aimax: die maximale Amplitude auf mindestens einem Sensor ist, der auf dem Mantel des Behälters bei der akustischen Sendung i platziert ist,

E: die summierte Energie auf mindestens einem Sensor ist, der auf dem Mantel des Behälters bei der akustischen Sendung i platziert ist, wobei die Energie das Integral der Amplitude zum Quadrat ist,

$E_{imax}$: die maximale Energie auf mindestens einem Sensor ist, der auf dem Mantel des Behälters bei der akustischen Sendung i platziert ist,

- in Abhängigkeit von diesem kritischen Schwellenwert ($S_c$) Ableiten eines Zustands des Behälters.

2. Verfahren nach dem vorhergehenden Anspruch, **dadurch gekennzeichnet, dass** der Füllschritt (50) derart ausgeführt wird, dass ein Überdruck zwischen 100 % und 120 % eines Betriebsdrucks des Behälters erzeugt wird, und bevorzugt 110 % des Betriebsdrucks, wobei der Betriebsdruck dem Druck entspricht, bei dem vorgesehen ist, dass der Behälter in normalem Betrieb bei 15 °C arbeitet.

3. Verfahren nach dem vorhergehenden Anspruch, **dadurch gekennzeichnet, dass** der Betriebsdruck dem letzten maximalen Druck, dem der Behälter unterworfen wurde, entspricht.

4. Verfahren nach einem der vorhergehenden Ansprüche, **dadurch gekennzeichnet, dass** die Erfassung der Daten in Zusammenhang mit der Amplitude und Energie akustischer Sendungen, das aus dem Füllen resultiert, mit Hilfe des oder der Sensoren bei der Füllphase des Behälters und bei einer späteren Druckstufe ausgeführt wird.

5. Verfahren nach dem vorhergehenden Anspruch, **dadurch gekennzeichnet, dass** die Erfassung der Daten bei jeder akustischen Sendung, die einen Erfassungsschwellenwert von 40 dB überschreitet, ausgeführt wird.

6. Verfahren nach einem der vorhergehenden Ansprüche, **dadurch gekennzeichnet, dass** die Analyse der Daten bei jeder akustischen Sendung, die einen Beurteilungsschwellenwert von 55 dB überschreitet, ausgeführt wird.

7. Verfahren nach einem der vorhergehenden Ansprüche, **dadurch gekennzeichnet, dass** der kritische Schwellenwert ($S_c$) ausgehend von einer Addition der Daten in Zusammenhang mit der Amplitude und der Energie bei den akustischen Sendungen, die bei jedem Auftreten einer physischen Erscheinung erfasst werden, bestimmt wird.

8. Verfahren nach einem der vorhergehenden Ansprüche, **dadurch gekennzeichnet, dass** die Erfassung der Signale nur für die akustischen Sendungen ausgeführt wird, die eine Anzahl von Schlägen größer als 2 und eine Dauer von mehr als 5 $\mu$s haben.

9. Verfahren nach einem der vorhergehenden Ansprüche, **dadurch gekennzeichnet, dass** vor der Erfassung der Signale ein Bandpassfilter 50-850 kHz an die erfassten Signale angewandt wird.

10. Verfahren nach einem der vorhergehenden Ansprüche, **dadurch gekennzeichnet, dass** die Bestimmung des Zustands des Behälters ausgeführt wird, indem der kritische Schwellenwert ($S_c$) jedes Sensors mit einem Referenzwert ($S_{cref}$) verglichen wird, der ausgehend von der akustischen Aktivität mindestens eines Behälters, der vorbestimmte Schäden umfasst, bei einem Füllen dieses Behälters ermittelt wird.

11. Verfahren nach einem der vorhergehenden Ansprüche, **dadurch gekennzeichnet, dass** der Behälter aus einer fadenförmigen Aufwicklung hergestellt ist, die vollständig mit einem metallischen oder nicht metallischen Liner gewickelt ist.

12. Verfahren nach einem der vorhergehenden Ansprüche, **dadurch gekennzeichnet, dass** es einen Schritt der Überwachung der Entwicklung (54) des Hintergrundgeräuschs umfasst, um einen Alarm auszulösen, wenn das Hintergrundgeräusch einen hohen Pegel, der für ein Leck repräsentativ ist, erreicht.

13. Verfahren nach dem vorhergehenden Anspruch, **dadurch gekennzeichnet, dass** einer der Sensoren im Bereich des Hahns des Behälters angeordnet ist, und dass dieser Sensor ein Hochpasssensor ist, bevorzugt über 550 kHz.

14. Verfahren nach einem der vorhergehenden Ansprüche, **dadurch gekennzeichnet, dass** es vorab den folgenden Schritt umfasst:

- Ausstatten des Behälters mit mindestens zwei piezoelektrischen Sensoren, die regelmäßig um den Behälter angeordnet sind.

15. Verfahren nach einem der vorhergehenden Ansprüche, **dadurch gekennzeichnet, dass** es einen Schritt umfasst, der darin besteht, zu prüfen, ob die Empfindlichkeit der Sensoren vor und nach der Kontrolle nicht um mehr als 3 dB unterschiedlich ist.

16. Anlage zur Kontrolle eines Behälters, der bevorzugt zum Lagern von Gas unter hohem Druck bestimmt ist, die Mittel zum Umsetzen des Verfahrens nach einem der vorhergehenden Ansprüche umfasst und insbesondere:

- mindestens zwei akustische Sensoren (CA),
- ein Mittel zum Kontrollieren der Druckbeaufschlagung des Behälters während eines Füllens des Behälters,
- ein Mittel zum Erfassen der Daten in Zusammenhang mit der Amplitude und Energie akustischer Sendungen, die bei dem Füllen auftreten,
- ein Mittel zum Bestimmen mindestens eines kritischen Schwellenwerts ($S_c$) ausgehend von einer linearen Kombination zwischen den Daten in Zusammenhang mit der Amplitude und der Energie, die für ein Cluster von Signalen erhalten wird, das zonal in dem Hörumfeld des oder der Sensoren liegt, der ausgehend von der folgenden Formel bestimmt wird:

$$\sum_{i=1}^{N}\left(\frac{A_i}{A_i\max} + \frac{E_i}{E_i\max}\right)$$

wobei

N: die Anzahl akustischer Sendungen ist, genauer genommen die Anzahl von Bursts in dem lokalisierten Cluster,
$A_i$: die summierte Amplitude auf mindestens einem Sensor ist, der auf dem Mantel des Behälters bei der akustischen Sendung i platziert ist,
Aimax: die maximale Amplitude auf mindestens einem Sensor ist, der auf dem Mantel des Behälters bei der akustischen Sendung i platziert ist,
E: die summierte Energie auf mindestens einem Sensor ist, der auf dem Mantel des Behälters bei der akustischen Sendung i platziert ist, wobei die Energie das Integral der Amplitude zum Quadrat ist,
$E_{imax}$: die maximale Energie auf mindestens einem Sensor ist, der auf dem Mantel des Behälters bei der akustischen Sendung i platziert ist,

- ein Mittel zum Ableiten eines Zustands des Behälters in Abhängigkeit von diesen kritischen Schwellenwerten ($S_c$).

**Claims**

1. Method of monitoring a reservoir, in particular a reservoir made of composite material, preferably intended for storing gas at high pressure, the reservoir being provided with at least one acoustic sensor during the monitoring, the method being **characterised in that** it comprises the following steps:

- filling the reservoir with a fluid (50),
- acquiring data relating to the amplitude and the energy of acoustic emissions resulting from the filling, with the aid of the one or more sensors (51, 52),
- determining at least one critical threshold value ($S_c$) on the basis of a linear combination between data relating to the amplitude and the energy, obtained for a cluster of zonally-localised signals in the listening radius of the one or more sensors, determined according to the following formula (53):

$$\sum_{i=1}^{N}\left(\frac{A_i}{A_i\max} + \frac{E_i}{E_i\max}\right)$$

where

N: number of acoustic emissions, more precisely the number of bursts in the localised cluster;

$A_i$: amplitude cumulated over at least one sensor placed on the shell of the reservoir during the acoustic emission i,

$A_{i\,max}$: maximum amplitude over at least one sensor placed on the shell of the reservoir during the acoustic emission i,

E: energy cumulated over at least one sensor placed on the shell of the reservoir during the acoustic emission i, the energy being the integral of the amplitude squared,

$E_{i\,max}$: maximum energy over at least one sensor placed on the shell of the reservoir during the acoustic emission i,

- as a function of this critical threshold value ($S_c$), deducing therefrom a state of the reservoir.

2. Method according to the previous claim, **characterised in that** the filling step (50) is performed so as to generate an overpressure of between 100% and 120% of an operating pressure of the reservoir, and preferably 110% of the operating pressure, whereby the operating pressure corresponds to the pressure at which the reservoir is intended to operate in normal mode at 15°C.

3. Method according to the previous claim, **characterised in that** the operating pressure corresponds to the last maximum pressure to which the reservoir was subjected.

4. Method according to one of the previous claims, **characterised in that** the acquisition of the data on the amplitude and energy of the acoustic emissions resulting from the filling, using the one or more sensor(s) is performed during the reservoir filling phase and during a subsequent pressure stage.

5. Method according to the previous claim, **characterised in that** the acquisition of the data is performed at each acoustic emission exceeding an acquisition threshold of 40 dB.

6. Method according to one of the previous claims, **characterised in that** the data analysis is performed at each acoustic emission exceeding an assessment threshold of 55 dB.

7. Method according to one of the previous claims, **characterised in that** the critical threshold value ($S_c$) is determined by adding the data on the amplitude and the energy to the acoustic emissions acquired at each occurrence of a physical phenomenon.

8. Method according to one of the previous claims, **characterised in that** the acquisition of the signals is only performed for acoustic emissions having a number of counts exceeding 2 and a duration exceeding 5 μs.

9. Method according to one of the previous claims, **characterised in that** prior to the acquisition of the signals, a 50-850 kHz band-pass filter is applied to the signals detected.

10. Method according to one of the previous claims, **characterised in that** the determination of the state of the reservoir is performed by comparing the critical threshold value ($S_c$) of each sensor with a reference value (Scref) produced according to the acoustic activity of at least one reservoir comprising predetermined damage during a filling phase of said reservoir.

11. Method according to one of the previous claims, **characterised in that** the reservoir is produced by filament winding, fully wrapped with a metal or non-metal liner.

12. Method according to one of the previous claims, **characterised in that** it comprises a step for monitoring changes (54) to the background noise in order to trigger an alarm when the background noise reaches a high level representing a leak.

13. Method according to the previous claim, **characterised in that** one of the sensors is arranged at the level of the valve of the reservoir and that said sensor is a high-pass sensor, preferably greater than 550 kHz.

14. Method according to one of the previous claims, **characterised in that** it comprises the following prior step:

- equipping the reservoir with at least two piezoelectric sensors distributed at regular intervals around the reservoir.

15. Method according to one of the previous claims, **characterised in that** it comprises a step consisting of checking that the sensitivity of the sensors before and after the monitoring does not differ by more than 3 dB.

16. Installation for monitoring a reservoir, preferably intended for storing gas at high pressure, comprising means for implementing the method according to one of the previous claims and in particular:

- at least two acoustic sensors (CA),
- a means for monitoring the pressurisation of the reservoir during a reservoir filling phase,
- a means for acquiring data on the amplitude and energy of the acoustic emissions occurring during a reservoir filling phase,
- means for determining at least one critical threshold value ($S_c$) on the basis of a linear combination between data relating to the amplitude and the energy, obtained for a cluster of zonally-localised signals in the listening radius of the one or more sensors, determined according to the following formula:

$$\sum_{i=1}^{N}\left(\frac{A_i}{A_i \max} + \frac{E_i}{E_i \max}\right)$$

where

N: number of acoustic emissions, more precisely the number of bursts in the localised cluster,
$A_i$: amplitude cumulated over at least one sensor placed on the shell of the reservoir during the acoustic emission i,
$A_{i\,max}$: maximum amplitude over at least one sensor placed on the shell of the reservoir during the acoustic emission i,
E: energy cumulated over at least one sensor placed on the shell of the reservoir during the acoustic emission i, the energy being the integral of the amplitude squared,
$E_{i\,max}$: maximum energy over at least one sensor placed on the shell of the reservoir during the acoustic emission i,

- a means for deducing a state of the reservoir as a function of these critical threshold values ($S_c$).

FIG. 1

FIG. 2

Pℓ

P

Pm

T

FIG. 3

50    51    52    53    54    55    56

FIG. 4

# EP 2 737 309 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 2199787 A
- FR 2838519
- US 20080302186 A
- US 5522428 A
- EP 0665432 A
- EP 2166348 A

### Littérature non-brevet citée dans la description

- **CALABRO A. ; ESPOSITO C. ; LIZZA A. ; GIORDANO M. ; D'AMORE A. ; NICOLAIS L.** Analysis of the acoustic émission signals associated to failure modes in CFRP laminates. *8th European Conference on Composite Materials (ECCM-8),* 1997, 444
- **DE GROOT P.J. ; WIJNEN P.A. ; JANSSEN R.B.F.** Real time frequency détermination of acoustic for different fracture mechanisms in carbon/epoxy composites. *Composites sciences and technology,* 1995, vol. 55, 405-412
- **SUZUKI H. ; TAKEMOTO M. ; ONO K.** A study of fracture dynamics in a model composite by acoustic signal processing. *Journal of Acoustic émission,* 1993, vol. 11, 117-128
- **CHEN O. ; KARANDIKAR P. ; TAKEDA N. ; KISHI T.** Acoustic émission characterization of a glass-matrix composite. *Nondestructive Testing and Evaluation,* 1992, vol. 8 (9), 389-403
- **KIM S.T. ; LEE Y.T.** Characteristics of damage and fracture processes of carbon fiber reinforced plastic under loading-unloading test by using AE method. *Materials Science and Engineering,* 1997, vol. A234-236, 322-326
- **MOEVUS M. ; GODIN N. ; R'MILI M. ; ROUBY D. ; REYNAUD P. ; FANTOZZI G ; FARIZY G.** Analysis of damage mechanisms and associated acoustic emission in two SiCf/[Si-B-C] composites exhibiting different tensile behaviours. Part II: Unsupervised acoustic emission data clustering. *Composites Science and Technology,* 2008, vol. 68, 1258-1265
- **GODIN N. ; DESCHANEL S. ; COURBON J.** Emission acoustique : identification de la signature acoustique des mécanismes d'endommagement et prévision de la durée de vie. *Matériaux & techniques,* vol. 97, 35-42
- **BUNSELL A.R. ; VALENTIN D.** Towards a life prediction technique for carbon fibre filament wound structures subjected to steady pressure. *Composites structures,* 1983, vol. 1 (1), 67-81
- **VALENTIN D. ; BUNSELL A.R.** Suivi de l'endommagement des composites à fibres de carbones par émission acoustique. *3èmes journées Nationales sur les Composites,* 21 Septembre 1982, 131-140
- **BLASSIAU S.** Modélisation des phénomènes microstructuraux au sein d'un composite unidirectionnel carbone/époxy et prédiction de durée de vie : contrôle et qualification de réservoirs bobinés. *Thèse de doctorat, Ecole Nationale Supérieure des Mines de Paris,* 2005